# EUROPEAN PATENT APPLICATION

(11) **EP 1 802 066 A2**
(43) Date of publication of application: **27.06.2007**
(21) Application number: 06254848.2
(22) Date of filing: 19.09.2006
(51) Int. Cl.: H04L 27/26

(54) **OFDM Radio communication system and apparatus**

(30) Priority: 22.12.2005 JP 2005370249
(71) Applicant: KABUSHIKI KAISHA TOSHIBA, Tokyo 105-8001 (JP)
(72) Inventor: Sakata, Ren, Toshiba Corporation, Tokyo (JP); Akita, Koji, Toshiba Corporation, Tokyo 105-8001 (JP)
(74) Representative: Maury, Richard Philip

(57) **Abstract**

A radio communication system includes a first radio communication apparatus comprising a data generating unit generating transmit data, a mapping unit allocating a modulation signal generated according to the transmit data to two subcarriers between which a frequency difference of a first frequency is, an IFFT unit performing IFFT on the modulation signal allocated to each subcarrier to generate an OFDM signal having a second frequency higher than the first frequency, and a transmitter transmitting a radio frequency signal obtained from the OFDM signal, and a second radio communication apparatus comprising a receiver (22) downconverting the radio frequency signal into a baseband signal, an AD converter (24) sampling the baseband signal at the first frequency, a FFT unit (25) performing FFT on an output of the AD converter (24) to extract a receive signal, and a data demapping unit (27) demapping the receive signal to obtain receive data.

## Description

This invention relates to a radio communication system employed for, for example, Orthogonal Frequency Division Multiplexing (OFDM) communications and Multi-Carrier Code Division Multiple Access (MC-CDMA) communications.

Recently, attention has been focused on a technique of mapping digital signals to a plurality of subcarriers, converting the signals into broadband signals, and transmitting and receiving the broadband signals, in the OFDM communications and MC-CDMA communications, to accelerate the transmission speed and enhance the resistance to the frequency selective fading.

For example, IEEE 802.11a communication employing the OFDM has already spread as the wireless LAN standard, capable of communications at 54 Mbps after error correct decoding, by mapping maximum 64 QAM signals to 48 data subcarriers.

According to this standard, the frequency diversity effect can be acquired even if the communications band width is 20 MHz, in the frequency selective fading. Therefore, this standard is characterized by reducing errors by interleaving in the subcarrier direction and the error-correcting function even if the quality in some of the subcarriers becomes deteriorated.

In addition, a technique of mapping the same signal of important data such as control data to a plurality of subcarriers to make use of the frequency diversity effect, is also reviewed. Japanese Patent No. 3485860 discloses a method of grouping other parties of communications and using some of subcarriers as those for the groups.

However, if the control data is allocated to wideband signals, the receiver needs to execute the signal processing such as sampling at a high speed. Thus, a problem arises that, inefficiently, the receiver consumes a comparatively large amount of electric power.

An aspect of the present invention is a radio communication system for executing multi-carrier communications employing a plurality of subcarriers between a plurality of radio communication apparatuses. The first radio communication apparatus comprises a data generating unit configured to generate transmit data, a modulating unit configured to modulate the transmit data to a modulation signal, a mapping unit configured to allocate a modulation signal to two subcarriers between which a frequency difference of a first frequency is, an inverse Fourier transform unit configured to perform inverse Fourier transform on the modulation signal allocated to each of the subcarriers to generate an OFDM modulation signal having a second frequency higher than the first frequency as a sample speed, and a transmitter transmitting a radio frequency signal obtained by converting the OFDM modulation signal into an analog signal and upconverting the analog signal. The second radio communication apparatus comprises a receiver receiving the radio frequency signal transmitted from the first radio communication apparatus and downconverting the radio frequency signal into a baseband signal, an AD converter executing AD conversion by sampling the baseband signal at the first frequency, a Fourier transform unit configured to perform Fourier transform on an output of the AD converter to extract a receive signal from the output of the AD converter, and a data demapping unit configured to demap the receive signal to obtain receive data.

The invention can be more fully understood from the following detailed description when taken in conjunction with the accompanying drawings, in which:
FIG. 1 is a block diagram showing a configuration of a transmitter according to an embodiment;
FIG. 2 is a block diagram showing a configuration of a receiver according to the embodiment;
FIG. 3 is an illustration of a subcarrier distribution, describing mapping executed by a subcarrier mapping unit in the transmitter shown in FIG. 1;

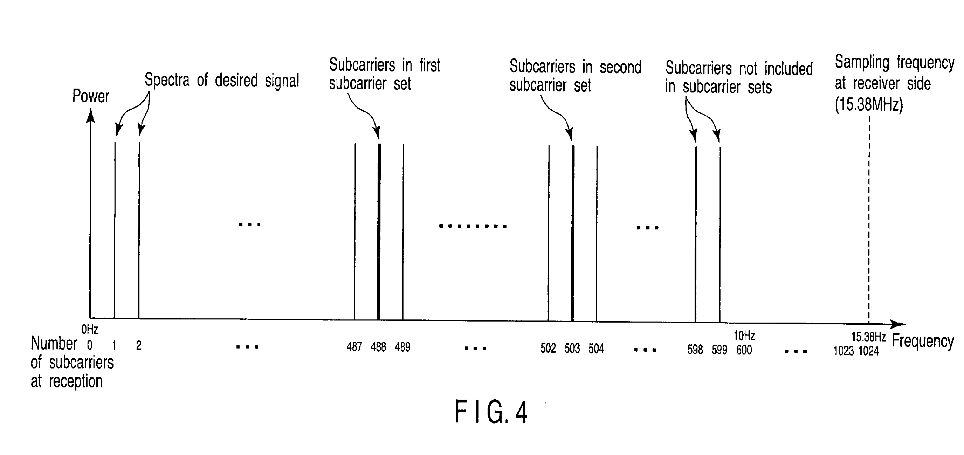

FIG. 4 is an illustration describing sampling executed by a DA conversion unit in the receiver shown in FIG. 2;
FIG. 5 is an illustration describing a channel response of each subcarrier;
FIG. 6 is an illustration describing sampling executed by the DA conversion unit in the receiver shown in FIG. 2;
FIG. 7A to FIG. 7E are illustrations of communications bands which can be employed by communications between the transmitter shown in FIG. 1 and the receiver shown in FIG. 2;
FIG. 8 is an illustration of symbols which can be employed by communications between the transmitter shown in FIG. 1 and the receiver shown in FIG. 2; and
FIG. 9 is an illustration of symbols in a case where phase control is executed in the communications between the transmitter shown in FIG. 1 and the receiver shown in FIG. 2.

An embodiment of the present invention will be explained below with reference to the accompanying drawings.

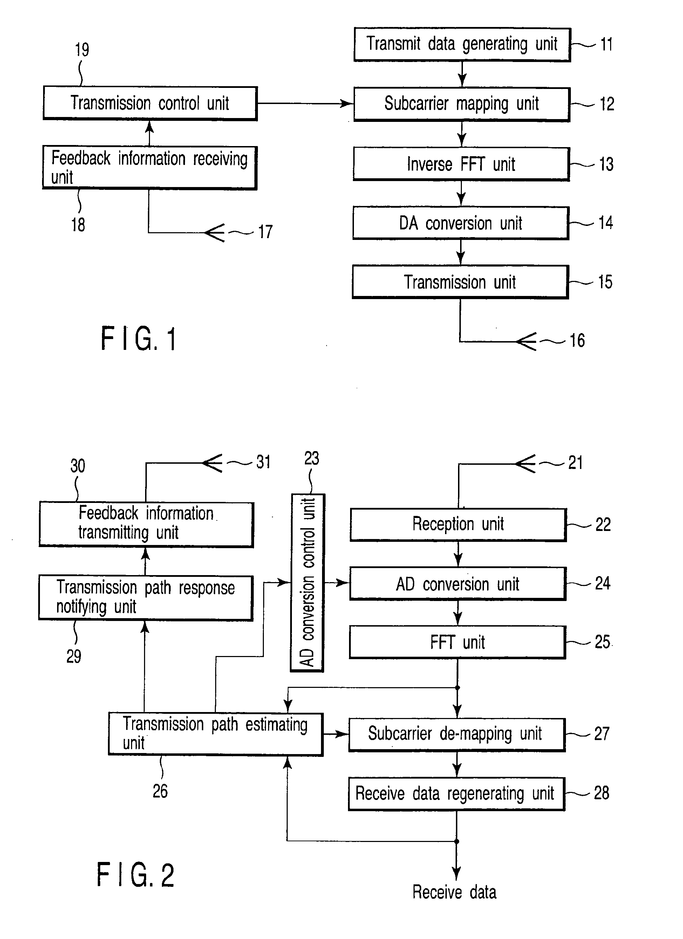

As shown in FIG. 1, a transmitter comprises a transmit data generating unit 11, a subcarrier mapping unit 12, an inverse FFT unit 13, a DA conversion unit 14, a transmission unit 15, a transmitting antenna 16, a receiving antenna 17, a feedback information receiving unit 18, and a transmission control unit 19.

The transmit data generating unit 11 generates transmit data which should be transmitted to a receiver and outputs the transmit data to the subcarrier mapping unit 12. At an initial stage of operation, the transmit data generating unit 11 generates transmit data representing a known signal which is preliminarily determined together with the receiver. After a predetermined time has elapsed, the transmit data generating unit 11 generates as the transmit data control signals such as calling signals for notification of user data or incoming calls, and synchronization signals for frequency, symbol or frame synchronization.

The transmit data may be generated in the transmit data generating unit 11 and output at different timings or a plurality of items of the transmit data may be generated and output simultaneously.

The subcarrier mapping unit 12 modulates the transmit data to signals of QPSK, 16 QAM, etc. and simultaneously allocates the modulation signals obtained from the modulation to a plurality of OFDM subcarriers. A plurality of subcarriers to which the same modulation signal is thus allocated are called below a subcarrier set.

When instructions about the amplitude and the phase rotation amount are given to the subcarrier mapping unit 12 by the transmission control unit 19 to be described later, the subcarrier mapping unit 12 varies the amplitude and the phase rotation amount of the modulation signal for each subcarrier in accordance with the instructions. For this modulation, various kinds of modulation schemes such as BPSK, 8PSK, 16PSK, ASK, FSK, QAM, etc. can be applied.

The allocation of the modulation signals to the OFDM subcarriers in the subcarrier mapping unit 12 is executed such that a difference in frequency between the subcarriers in the same subcarrier set becomes a sampling frequency (first frequency width) employed at the receiver side to be described later. In other words, the sampling frequency employed in the receiver is equivalent to the difference in frequency between the OFDM subcarriers in the transmitter.

The inverse FFT unit 13 executes Inverse Fast Fourier Transform (IFFT) for the modulation signal of each subcarrier allocated in the subcarrier mapping unit 12, to obtain an OFDM modulation signal having a second frequency width as a sample speed. The sample speed is, for example, 30.72 MHz or a frequency of an integral multiple of this frequency, and is an integral multiple of a first frequency width (for example, 3.84 MHz).

The DA conversion unit 14 converts the OFDM modulation signal into an analog signal. The transmission unit 15 upconverts the analog signal into a radio frequency and transmits them via the transmitting antenna 16.

The receiving antenna 17 receives a radio signal transmitted from the receiver.

The feedback information receiving unit 18 downconverts the radio signal into a baseband signal, demodulates and decodes the baseband signal, and obtains channel response information of the subcarrier measured by the receiver.

The transmission control unit 19 determines, for each subcarrier, the amplitude and the phase rotation amount which is the inverse characteristic of the channel response measured and given by the receiver, and notifies the subcarrier mapping unit 12 of the amplitude and the phase rotation amount on the basis of the determination result.

As shown in FIG. 2, a receiver comprises a receiving antenna 21, a reception unit 22, an AD conversion control unit 23, an AD conversion unit 24, an FFT unit 25, a channel estimating unit 26, a subcarrier de-mapping unit 27, a receive data regenerating unit 28, a channel response notifying unit 29, a feedback information transmitting unit 30 and a transmitting antenna 31.

The receiving antenna 21 receives the radio signal transmitted from the transmitter and outputs the radio signal to the reception unit 22. The reception unit 22 downconverts the radio signal into a baseband signal and outputs the baseband signal to the AD conversion unit 24.

The AD conversion control unit 23 controls a sampling frequency of the AD conversion unit 24. The AD conversion control unit 23 has a general mode and a power-saving mode as its control mode. If a discrimination result of which the channel estimating unit 26 notifies the AD conversion control unit 23 represents reception of the above-explained known signal, the AD conversion control unit 23 controls the sampling frequency in the general mode. If the discrimination result does not represent the reception of the above-explained known signal, the AD conversion control unit 23 controls the sampling frequency in the power-saving mode.

The AD conversion control unit 23 sets a second frequency width (or a frequency of higher speed than this) as the sampling frequency of the AD conversion unit 24, in the general mode, and sets the first frequency width as the sampling frequency of the AD conversion unit 24, in the power-saving mode.

The AD conversion unit 24 converts the baseband signal supplied from the reception unit 22 into a digital signal, at the sampling frequency set by the AD conversion control unit 23. In the general mode, the AD conversion unit 24 processes the second frequency width as the sampling frequency. The receive signal of each subcarrier is thereby converted into a digital signal, which is output to the FFT unit 25.

In the power-saving mode, the AD conversion unit 24 processes the first frequency width as the sampling frequency. Since a plurality of subcarriers are located with the first frequency width, they are synthesized with the same frequency by aliasing and sampled, and converted into a digital signal as a single subcarrier set, which is output to the FFT unit 25.

The aliasing represents a phenomenon that when an original signal of a high frequency is sampled with a low frequency ωs, the original signal emerges as a signal having a smaller frequency component than the frequency ωs. For example, if a signal having a higher frequency ω0 than the frequency ωs is sampled at the frequency ωs, a signal having a frequency of the smallest absolute value of ω0 + nωs (n is an arbitrary integer) can be obtained.

In the present embodiment, the first frequency width corresponds to the frequency ωs. In a case where the frequency at the location of a certain subcarrier is represented as ω0 = nωs + ωSC where ωSC represents a frequency of not less than 0 and not more than ωs, if the signal is sampled at the frequency ωs, the signal emerges at the location of the frequency ωSC. Since the signal of high frequency seems to be folded on the low frequency side in view of the spectrum, this phenomenon is sometimes called "spectrum folding".

The FFT unit 25 executes the Fast Fourier Transform (FFT) for the digital receive signal supplied from the AD conversion unit 24. Thus, the FFT unit 25 extracts the receive signal of each subcarrier if the AD conversion control unit 23 is operated in the general mode or extracts the receive signal of the subcarrier set if the AD conversion control unit 23 is operated in the power-saving mode. The receive signal thus extracted is output to the channel estimating unit 26 and the subcarrier de-mapping unit 27.

The channel estimating unit 26 discriminates whether or not the signal received from the transmitter is the known signal, with reference to the receive data regenerated by the receive data regenerating unit 28 to be described later, and notifies the AD conversion control unit 23 of the discrimination result. In a case where the known signal is received (in the general mode), the channel estimating unit 26 estimates the channel response of each subcarrier, with reference to the frequency characteristic and the time waveform of the receive signal extracted by the FFT unit 25, outputs the channel response to the subcarrier demapping unit 27 and the channel response notifying unit 29, and stores the channel response.

In a case where the known signal is not received (in the power-saving mode), the channel estimating unit 26 obtains the latest channel responses (frequency characteristics of amplitude levels and phase rotation amounts) of the respective subcarriers that have been stored at the reception, and outputs the average value to the subcarrier de-mapping unit 27 and the channel response notifying unit 29, as the channel response of the subcarrier set.

When the AD conversion control unit 23 is in the general mode, the subcarrier de-mapping unit 27 multiplies the receive signal of each subcarrier by an inverse characteristic of the channel response obtained by the channel estimating unit 26 to correct the channel distortion. Then, the subcarrier de-mapping unit 27 extracts the receive data of each subcarrier from the corrected receive signals of the subcarriers and outputs the receive data to the receive data regenerating unit 28.

When the AD conversion control unit 23 is in the power-saving mode, the subcarrier de-mapping unit 27 multiplies the receive signal of the subcarrier set by the inverse characteristic of the channel response obtained by the channel estimating unit 26 to compensate the channel distortion. Then, the subcarrier de-mapping unit 27 extracts the receive data of the subcarrier set from the compensated receive signal of the subcarrier set and outputs the receive data to the receive data regenerating unit 28.

The receive data regenerating unit 28 regenerates the transmitted information from the receive data of each subcarrier or the receive data of the subcarrier set.

The channel response notifying unit 29 generates a transmit signal including the information about the channel response of each subcarrier or the subcarrier set estimated by the channel estimating unit 26 and outputs the transmit signal to the feedback information transmitting unit 30.

The feedback information transmitting unit 30 modulates a carrier with the transmit signal, generates a radio signal by upconverting the modified carrier, and transmits the radio signal to the transmitter via the transmitting antenna 31.

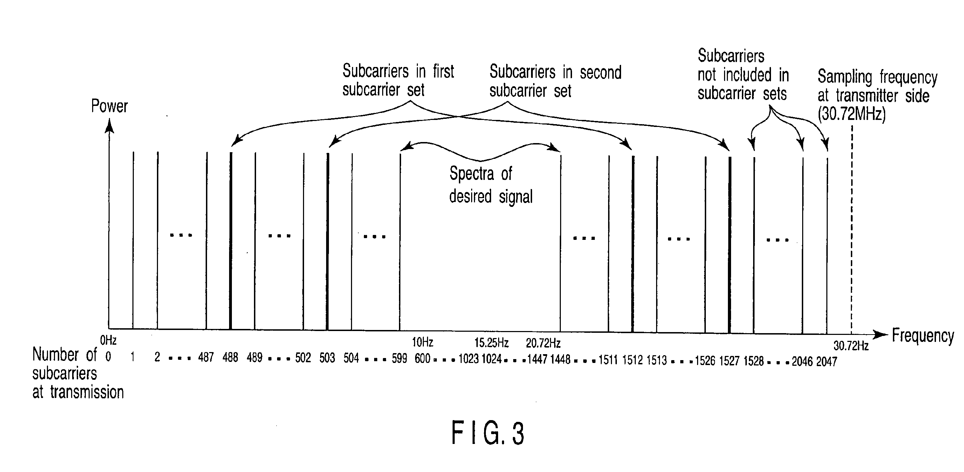

Next, operations of the radio communication system having the above-described configuration are described. In the subcarrier mapping unit 12 of the transmitter, 1200 subcarriers excluding the DC subcarrier are located in the band width of about 20 MHz, as shown in FIG. 3.

In FIG. 3, the DC subcarrier is located at the left edge. The DC subcarrier is a 0-th subcarrier, and the number of subcarriers is increased as the frequency is higher. The first to 599-th subcarriers and the 1448-th to 2047-th subcarriers are employed in the multi-carrier communications.

To generate these subcarriers, the inverse FFT unit 13 utilizes 2048-point FFT. If a subcarrier interval is 15 kHz, the 2048-point FFT can represent 30.72 MHz band width. The digital signal sample speed in the transmitter, i.e. the second frequency width may be set at 30.72 MHz or an integral multiple thereof.

The transmit data generated by the transmit data generating unit 11 is modulated by the subcarrier mapping unit 12. The modulation signal thus obtained is simultaneously allocated to a plurality of OFDM subcarriers.

In the example shown in FIG. 3, the first frequency width is 1024 subcarriers, i.e. 15.36 MHz since the second frequency width is 30.72 MHz or an integral multiple thereof. For this reason, to form two subcarrier sets in 1200 subcarriers in FIG. 3, for example, the 488-th and 1512-th subcarriers are regarded as the first subcarrier set, and the 503rd and 1527-th subcarriers are regarded as the second subcarrier set.

In other words, the difference in frequency between two subcarriers included in the first subcarrier set is regarded as the first frequency width, and the same signal is mapped to each of the subcarriers by the subcarrier mapping unit 12. Similarly, the difference in frequency between two subcarriers included in the second subcarrier set is regarded as the first frequency width, and the same signal is mapped thereto.

The modulation signal of each subcarrier allocated by the subcarrier mapping unit 12 is subjected to inverse FFT by the inverse FFT unit 13 and thereby becomes the OFDM modulation signal. The sample speed of the OFDM modulation signal is the second frequency width. The OFDM modulation signal is converted into the analog signal by the DA conversion unit 14. The analog signal is upconverted by the transmission unit 15 into the radio frequency, which is radiated into space via the transmitting antenna 16.

The radio signal transmitted from the transmitter is received by the receiving antenna 21 of the receiver, and is downconverted into the baseband signal by the reception unit 22. The baseband signal is sampled by the AD conversion unit 24. In the AD conversion unit 24, the sampling frequency is set by the AD conversion control unit 23.

Next, the initial stage of the operations, or a case where the discrimination result of the channel estimating unit 26 represents the known signal, is described. The AD conversion control unit 23 is in the general mode, and sets the second frequency width as the sampling frequency, for the AD conversion unit 24.

The baseband signal obtained by the reception unit 22 is A/D-converted by the AD conversion unit 24 which executes sampling using the second frequency width as the sampling frequency. Thus, the receive signals of the 488-th, 503rd, 1512-th and 1527-th subcarriers are converted into digital signals, which are output to the FFT unit 25.

The digital receive signals of the respective subcarriers are subjected to the FFT by the FFT unit 25. The receive signals of the 488-th, 503rd, 1512-th and 1527-th subcarriers are extracted, and output to the channel estimating unit 26 and the subcarrier demapping unit 27.

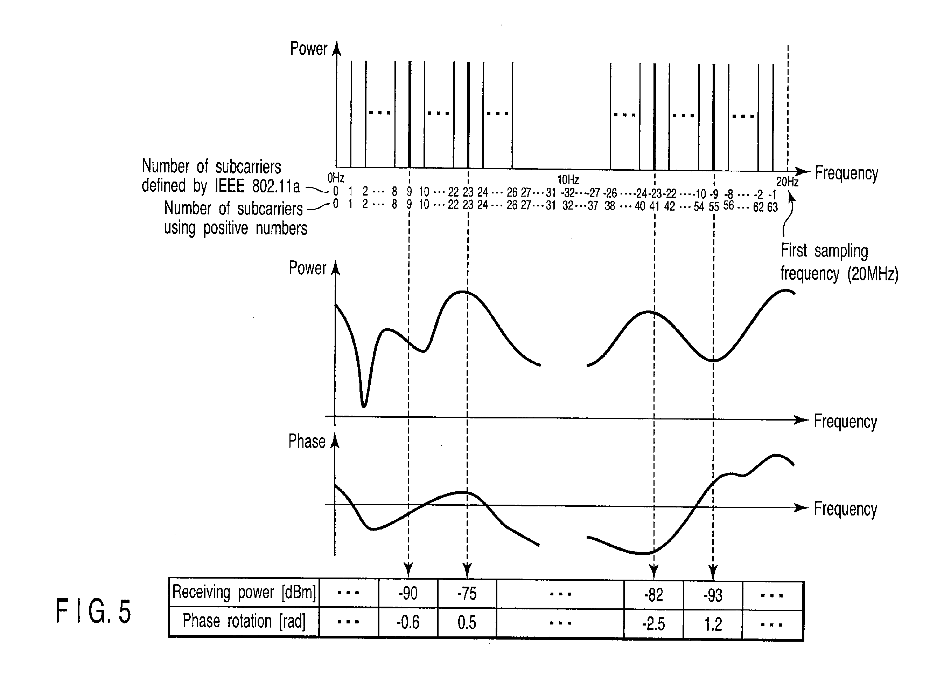

It is discriminated by the channel estimating unit 26 whether or not the receive signal of each of the subcarriers extracted by the FFT unit 25 is the known signal. The AD conversion control unit 23 is notified of the discrimination result. In addition, in the channel estimating unit 26, the channel response (frequency characteristic of amplitude level and phase rotation amount) of each subcarrier, as shown in FIG. 5, is estimated with reference to the frequency characteristic and the time waveform of the receive signal of each of the subcarriers. The estimation result is output to the subcarrier de-mapping unit 27 and the channel response notifying unit 29. If it is discriminated that the receive signal is the known signal, the channel estimating unit 26 stores the channel response of each of the subcarriers.

In addition, the receive signal of each of the subcarriers extracted by the FFT unit 25 is multiplied by the inverse characteristic of the channel response obtained by the channel estimating unit 26, by the subcarrier de-mapping unit 27, so as to compensate the channel distortion.

The receive data is extracted from the receive signal of each of the subcarriers having the compensated channel distortion, by the subcarrier demapping unit 27. The receive data regenerating unit 28 regenerates the transmitted information on the basis of the receive data.

In the channel response notifying unit 29, the transmit signal including the information about the channel response of each of the subcarriers estimated by the channel estimating unit 26, is generated. The feedback information transmitting unit 30 modulates the transmit signal, generates the radio signal by upconverting the modulated transmit signal, and transmits the radio signal to the transmitter via the transmitting antenna 31.

Thus, in the transmitter, the feedback information receiving unit 18 downconverts the radio signal into the baseband signal, and demodulates and decodes the baseband signal to obtain the channel response of the subcarrier.

On the basis of the channel response of the subcarrier, the transmission control unit 19 determines, for each of the subcarriers, the amplitude and the phase rotation amount from which the inverse characteristic of the channel response at the receiver side can be obtained. On the basis of the determination result, the transmission control unit 19 notifies the subcarrier mapping unit 12 of the amplitude and the phase rotation amount. On the basis of the amplitude and the phase rotation amount, the subcarrier mapping unit 12 varies the amplitude and the phase rotation amount of the modulation signal for each of the subcarriers.

Next, a case where the discrimination result of the channel estimating unit 26 does not represent the known signal is described. The AD conversion control unit 23 is in the power-saving mode, and sets the first frequency width as the sampling frequency for the AD conversion unit 24.

Thus, in the AD conversion unit 24, the baseband signal obtained by the reception unit 22 is sampled with reference to the first frequency width, i.e. the sampling frequency of the difference in frequency between the subcarriers in the subcarrier set.

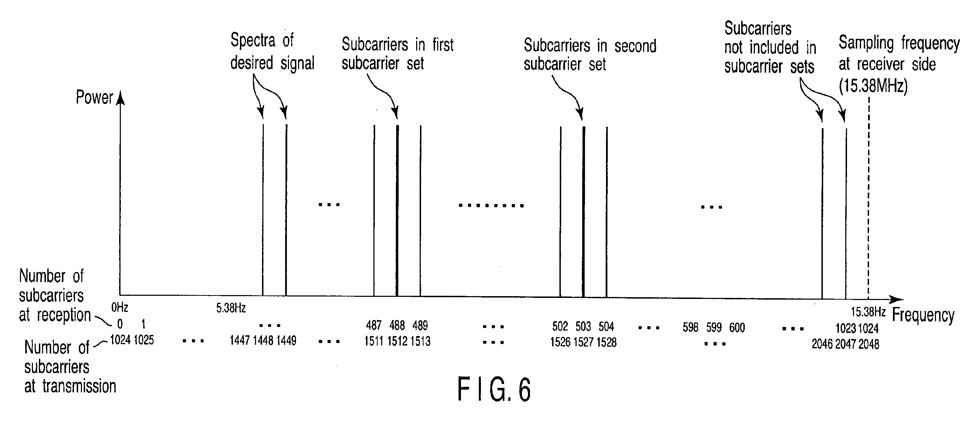

For this reason, aliasing occurs in the sampling of the AD conversion unit 24, and two subcarriers included in the same subcarrier set are synthesized as shown in FIG. 6.

In other words, the result obtained by synthesizing the receive signals of the 488-th and 1512-th subcarriers is converted into a digital signal, and the result obtained by synthesizing the receive signals of the 503-th and 1527-th subcarriers is converted into a digital signal.

The digital receive signals of the respective subcarrier sets thus obtained are subjected to the FFT by the FFT unit 25. The receive signals of the first subcarrier set and the second subcarrier set are extracted and output to the channel estimating unit 26 and the subcarrier de-mapping unit 27.

It is discriminated by the channel estimating unit 26 whether or not the receive signals of the subcarrier sets extracted by the FFT unit 25 are the known signals. The AD conversion control unit 23 is notified of the discrimination result. The channel estimating unit 26 obtains the average value from the latest channel responses of the subcarriers that have already been stored at the notification, and outputs the average value to the subcarrier de-mapping unit 27 and the channel response notifying unit 29 as the channel response of each subcarrier set.

In addition, the receive signals of the respective subcarrier sets extracted by the FFT unit 25 are multiplied by the inverse characteristic of the channel response obtained by the channel estimating unit 26, by the subcarrier de-mapping unit 27, and the channel distortion is thereby corrected.

From the receive signals of the subcarriers sets having the corrected channel distortion, the receive data is extracted by the subcarrier de-mapping unit 27. On the basis of the receive data, the receive data regenerating unit 28 regenerates the receiving information.

The channel response notifying unit 29 generates the transit signal including the information about the channel response of each subcarrier set estimated by the channel estimating unit 26. The feedback information transmitting unit 30 modulates the transmit signal, generates the radio signal by upconverting the modulated transmit signal, and transmits the radio signal to the transmitter via the transmitting antenna 31.

Thus, the feedback information receiving unit 18 of the receiver downconverts the radio signal into the baseband signal, and demodulates and decodes the downconverted baseband signal to obtain the channel response of the subcarrier set.

On the basis of the channel response of the subcarrier set, the transmission control unit 19 determines, for each subcarrier set, the amplitude and the phase rotation amount from which the inverse characteristic of the channel response at the receiver side can be obtained. The transmission control unit 19 notifies the subcarrier mapping unit 12 of the amplitude and the phase rotation amount, on the basis of the determination result. On the basis of the amplitude and the phase rotation amount, the subcarrier mapping unit 12 varies the amplitude and the phase rotation amount of the modulation signal of the subcarriers included in each subcarrier set.

In the radio communication system having the above-described configuration, the transmitter allocates the same modulation signal to a plurality of subcarriers having the frequency difference of the first frequency width. The receiver samples the baseband signal by using the first frequency width as the sampling frequency.

The subcarriers transmitting the same information are sampled in a synthesized state by the aliasing based on the difference between the sampling frequency at the transmitter side and the sampling frequency at the receiver side. Thus, in a case where no fading occurs in the channel or a case where the fading is regarded as flat fading, the phases of the superposing subcarriers are aligned and the Signal to Noise Ratio (SNR) is improved.

In addition, on the basis of the amplitude variation and the phase rotation amount detected by the receiver, the transmitter executes the feedback control of preliminarily correcting the amplitude variation and the phase rotation amount for each subcarrier before the transmission, by considering the influence from the amplitude variation and the phase rotation of each subcarrier in the channel in the frequency selective fading.

For this reason, the amplitude variation and the phase rotation that can influence for each subcarrier in the frequency selective fading can be minimized and the SNR can also be improved even in the frequency selective fading.

However, the feedback control is not indispensable. For example, if the frequency selective fading occurs and the phases are not aligned, it can be considered that the phase rotation due to the channel distortion in each of the subcarriers will be random, and the average value of the SNR at the reception is not improved. However, even if signals of some frequencies are received with a small power such that they cannot be received due to the frequency selective fading, signals of the other frequencies are synthesized with them by the aliasing and they can be thereby received. On the other hand, if the subcarrier interval is comparatively short and there is correlation between the channel responses, the SNR can be expected since the phase difference in the subcarriers becomes comparatively small.

When the radio communication system having the above-described configuration is employed with Time Division Duplex (TDD), it can be considered that a reverse-direction link from the receiver to the transmitter is also the same channel. Therefore, even if the transmit signal including the information about the channel response of each subcarrier set is not fed back, the transmitter may estimate the channel by referring to the known signal included in the reverse-direction link.

Furthermore, in the receiver, sampling is executed with the sampling frequency (first frequency width) which is smaller than the sampling frequency (second frequency width) of the transmitter side. For this reason, the control signal transmitted in the broadband can be received at a comparatively small sampling rate and the power consumption can be thereby reduced.

The radio communication system having the above-described configuration is suitable for, for example, the cellular communications system or, particularly, the transmission and reception of a call signal for notice of an incoming call. For example, some mobile communications terminals make a notice of an incoming call by discriminating "no call" in a case where there is no signal power or discriminating "called". By applying the present invention to such mobile communications terminals, the SNR of the call signal can be improved and an incoming call can be received certainly.

In general, the incoming processing is an initial processing to start communications between the base station and the mobile communications terminal. The possibility of success in the processing gives a great influence to the possibility of success in incoming call of the communications system. Therefore, the improvement of the SNR of the call signal achieved by application of the present invention is significantly effective.

When the improvement of the SNR at the receiver side is considered, the transmitting power of the subcarriers included in the subcarrier set may be reduced. For example, the transmitting power can be set to be inversely proportional to the number of subcarriers included in the subcarrier set.

In the above-described embodiment, the channel estimating unit 26 discriminates whether or not the receive signal is the known signal, and switches the general mode and the power-saving mode. Otherwise, if the communications frame configuration or the signal arrival timing is already known, the AD conversion control unit 23 may be operated in the general mode at the arrival timing of the known signal or operated in the power-saving mode at the arrival timing of the other signal.

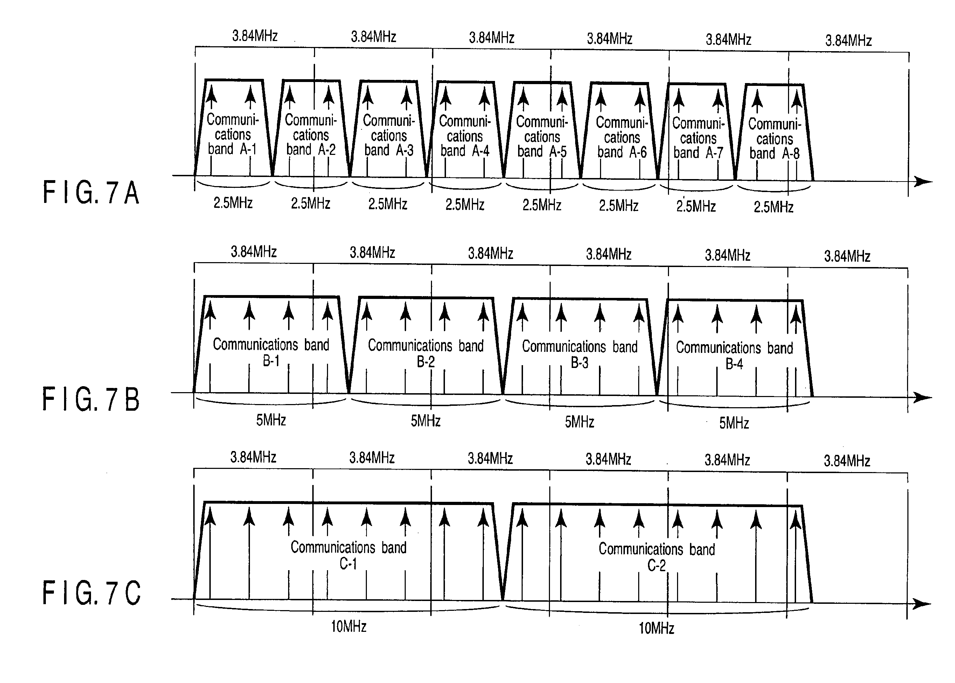

The present invention is not limited to the above-described embodiment. For example, communications between the transmitter and the receiver can also be executed by employing communications bands shown in FIG. 7A to FIG. 7E.

The communications bands shown in FIG. 7A are a communications band group in which eight communications bands having a bandwidth of 2.5 MHz are aligned but not overlapped. Therefore, eight multi-carrier communications can be simultaneously executed by employing the entire communications bandwidth of 20 MHz between the transmitter and the receiver.

The multi-carrier executed in each of the communications bands in the communications band group is the OFDM communications in which 151 subcarriers including the DC subcarrier are aligned at the subcarrier interval of 15 kHz. At this time, when the reception is executed in the single communications band by employing the 256-point FFT, the sampling speed of the receiver is not lower than 3.84 MHz. For this reason, the sampling speed is assumed to be 3.84 MHz in the following descriptions.

In the transmitter, the transmission is executed by aligning the subcarriers of the subcarrier set over a plurality of communications bands. The frequency interval of the subcarriers in the subcarrier set is set at 3.84 MHz, which is called the first frequency width. The second frequency width is set to be equivalent to the digital signal sampling speed necessary to simultaneously generate the signals of the entire communications band group.

When the inverse FFT unit 13 of the transmitter generates at once the signals of all the communications bands, the FFT unit 25 of the receiver needs to execute 2048-point FFT. For this reason, the second frequency width may be set at 30.72 MHz.

In other words, the AD conversion control unit 23 sets the sampling speed in the AD conversion unit 24 such that the first frequency width can be smaller than the second frequency width or the second frequency width can be an integral multiple of the first frequency width, similarly to the above-described embodiment.

The second frequency width may be equivalent to the digital signal sample speed required to simultaneously generate all the signals of a plurality of communications bands or may be the sampling speed of the receiver required to receive the signals of a plurality of communications bands or the entire communications band group.

In the receiver, the receive signal in entire 20 MHz is obtained as the baseband signal to be sampled, by the filtering and the frequency conversion in the reception unit 22. The receive signal does not need to be received in entire 20 MHz, but may be relieved partly in 20 MHz.

This receive signal is sampled at the sampling speed of 3.84 MHz by the AD conversion unit 24. Thus, a plurality of subcarriers in the subcarrier set are overlapped due to the aliasing and synthesized. As a result, the improvement of the SNR can be expected similarly to the above-described embodiment.

Therefore, in a case where the communications are executed in the communications band group shown in FIG. 7A, too, the employment of the communications bands is effective for transmission of the same call signals or synchronization signals. This is also effective for the other signals such as the pilot signals, control signals and data signals since the improvement of the SNR can be expected.

In a case where the transmission is executed in a plurality of communications bands by allocating the same signal to a plurality of subcarriers, the reception can be executed at a comparatively small sampling rate, which contributes to the reduction of the power consumption in the apparatus.

Since employment of the OFDM communications is assumed, the digital signal sample speed of the transmitter for forming a plurality of communications bands at once for the transmission, which is determined on the basis of the number of FFT points and the subcarrier interval, or the sampling speed of the receiver for receiving the signals in a plurality of communications bands at once is employed, as the second frequency band. However, the present invention is not limited to the OFDM communications, but can be applied to the multi-carrier communications scheme.

If the present invention is directed to the multi-carrier communications scheme including the OFDM communications, FDMA, multi-carrier CDMA, etc. and the digital signal sample speed or sampling speed is not clarified, the band width including a plurality of communications bands may be employed as the second frequency width.

In this example, the second frequency width may be the band width occupied by the desired signal spectrum, i.e. 20 MHz. Otherwise, if the occupied band is not clarified by shaping or distorting the desired signal spectrum, the second frequency width may be the transmission band width of the transmitter or the reception band width of the receiver.

In the example of FIG. 7A, the communications bands are aligned without spaces or intervals. However, if the subcarriers in the subcarrier set are aligned in the first frequency width or at an interval of an integral multiple of the first frequency width, a plurality of communications bands may be aligned at intervals.

The communications can also be executed in the communications bands of 5 MHz, 10 MHz, 15 MHz, 20 MHz as shown in FIG. 7B to FIG. 7E. In addition, the communications can also be executed in a combination of a plurality of communications bands shown in FIG. 7A to FIG. 7E.

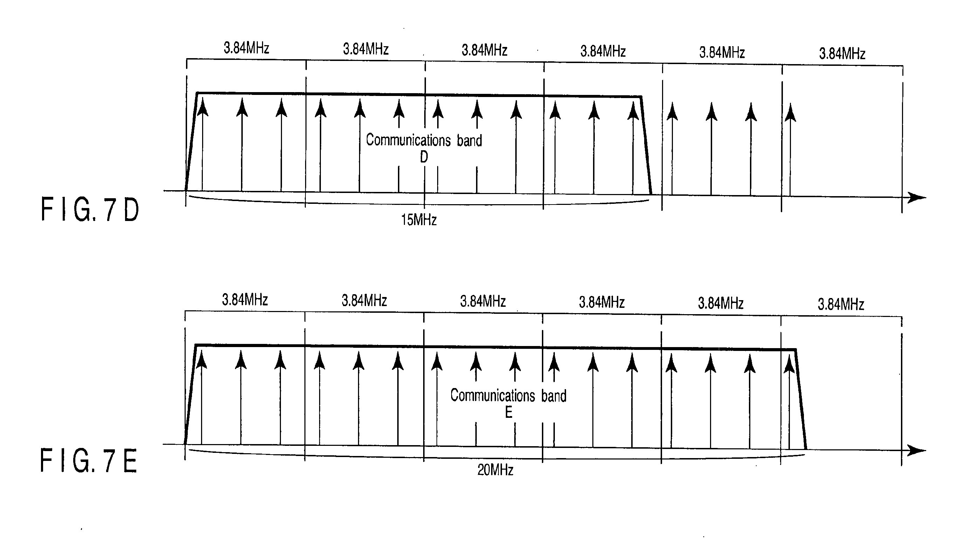

For example, in a case where the communications band A-1 of FIG. 7A and the communications band B-1 of FIG. 7B are employed or the communications band D of FIG. 7D and the communications band E of FIG. 7E are employed, the employed bands are overlapped. Therefore, time division communications are executed in either of the communications bands or transmission and reception are executed in a method of separating the communications bands by space sharing, multi-antenna or code division.

The same effect as that of the embodiment can be obtained by locating the subcarriers in the first frequency width that is smaller than the second frequency width, inside the communications band group and setting the frequencies of the subcarriers between the communications bands to be the same as each other as described in the embodiment.

In addition, for example, in a case where the communications band A-1 of FIG. 7A and the communications band B-4 of FIG. 7B are employed or the communications band B-1 and the communications band B-2 of FIG. 7B are employed, the employed bands are not overlapped. Therefore, they can be employed simultaneously.

Furthermore, the same effect as that of the embodiment can be obtained by locating the subcarriers in the first frequency width that is smaller than the second frequency width, inside the communications band group as described in the embodiment.

Mapping the call signal to notify the subcarrier set of the incoming call, in the transmitter shown in FIG. 1, is considered. In the example shown in FIG. 7A to FIG. 7E, the first frequency width is set at 3.84 MHz and three subcarriers are included in the first frequency width. In other words, three subcarrier sets can be formed. The transmitter maps the call signal to the subcarriers in any one of the subcarrier sets.

In s case where the mapping is executed in the transmitter in this manner, the signals of the three subcarrier sets can be received by sampling the baseband signal at 3.84 MHz in the receiver shown in FIG. 2.

Even if the transmitter employs the subcarriers in any one of the basebands of 2.5 MHz to 20 MHz, the transmitter can detect occurrence of the incoming call by demodulating the only signals of the three subcarrier sets. For this reason, the power consumption required for the sampling can be reduced and then the power consumption for the processing employing the digital band restriction filter, FFT, etc. to be executed later can also be reduced.

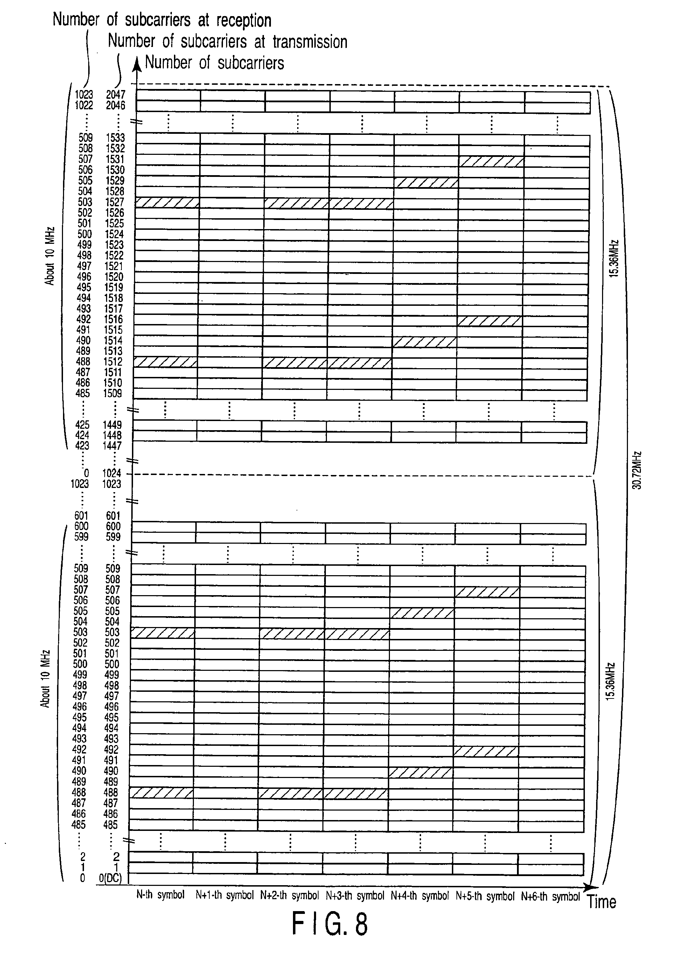

Execution of mapping along symbols is not mentioned in the above-described embodiment, but various manners of the mapping are considered. As one of such manners, FIG. 8 illustrates the subcarriers which are allocated the same transmit signal and which are mapped to form the subcarrier sets, along a plurality of symbols.

In the example of FIG. 8, the 488-th subcarrier and the 1512-th subcarrier are included in a subcarrier set. Similarly, the 503-th subcarrier and the 1527-th subcarrier are included in a subcarrier set.

In this case, mapping may be executed at a specific symbol alone, for example, N-th symbol, or mapping may be repeated at every other symbol, such as the N-th symbol and the N+2 -th symbol.

Otherwise, mapping may be executed at successive symbols such as the N+2 -th symbol and the N+3 -th symbol or may be executed at successive symbols such as the N+3 -th symbol, N+4 -th symbol, N+5 -th symbol while changing the number of subcarrier within the subcarrier set.

The temporal diversity effect can be obtained by repeating the mapping temporally for the transmission and reception. If the pilot signal is mapped to the subcarrier set, the time variation of the channel can be followed more exactly by repeating the mapping temporally.

Incidentally, the phase difference between the subcarriers in the subcarrier set occurs, in the frequency selective fading. For this reason, the subcarriers having the dropped receiving power can be reduced by sampling the subcarriers in the subcarrier set in a synthesized state, but the SNR may not be definitely improved.

Thus, to improve the SNR stably, the transmitter executes, at a plurality of symbols, the processing of allocating the same modulation signal to a plurality of subcarriers having the frequency difference of the first frequency width and then transmitting the signal, and the transmission control unit 19 executes the phase control with each symbol such that the phase differs in the subcarriers.

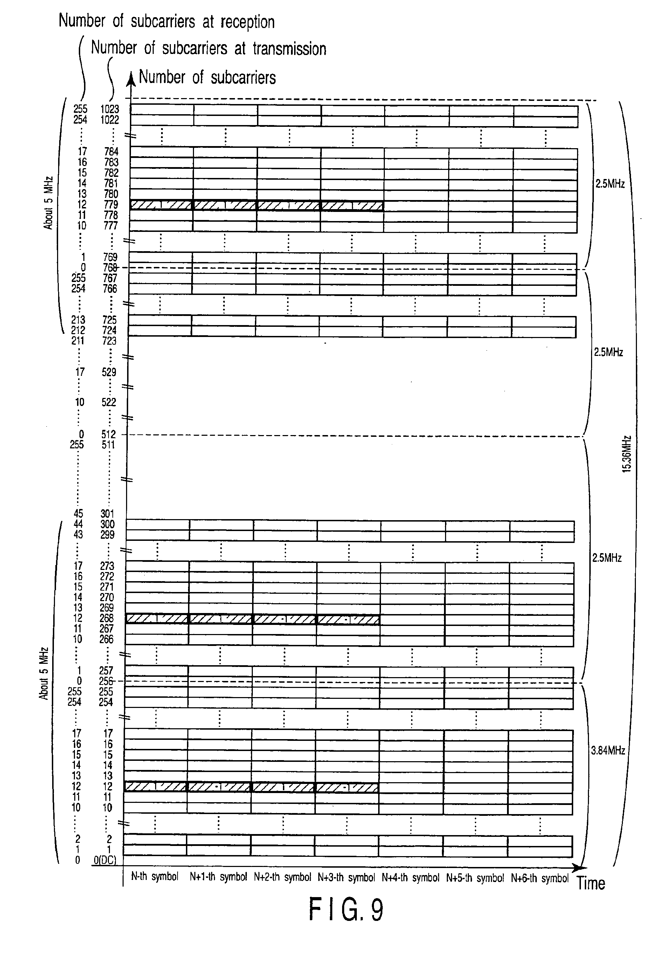

A concrete example of the phase control is described below. FIG. 9 shows the subcarriers mapped to form the subcarrier set allocated the same transmit signal, at a plurality of symbols.

In the example of FIG. 9, the transmitter generates the OFDM modulation signal with which the number of subcarriers is 6021, in the bandwidth of 10 MHz, by employing the 1024-point FFT, at the digital signal sample speed of 15.36 MHz, while the receiver executes sampling at 3.84 MHz.

In the transmitter, the 12-th, 268-th, and 779-th subcarriers having the frequency interval of the first frequency width, i.e. 3.84 MHz (or an integral multiple of 3.84 MHz) are included in one subcarrier set.

In the receiver, the AD conversion unit 24 executes sampling at the sampling frequency of 3.84 MHz. Thus, the aliasing is thereby generated, and the 12-th, 268-th, and 779-th subcarriers are synthesized and output by the AD conversion unit 24. Even if the sampling is executed at an integral multiple of the first frequency width, i.e. 7.68 MHz, the 268-th and 779-th subcarriers are synthesized.

However, since the frequencies of the 268-th and 779-th subcarriers are remote from each other, the signal phases are considered to be greatly different from each other due to the frequency fading. If the signal phases are greatly different from each other, the SNR of the subcarriers synthesized by the aliasing may not be definitely improved.

Thus, the transmitter executes, with a plurality of symbols, the processing of allocating the same modulation signal to a plurality of subcarriers having the frequency difference of the first frequency width and then transmitting the signal, and the transmission control unit 19 executes the phase control at each symbol such that the phase differs in the subcarriers.

The subcarrier mapping unit 12 varies the phase of each of the subcarriers included in the subcarrier set, with each symbol, under control of the transmission control unit 19. As a result, the synthesizing manner is changed at each symbol and the possibility of the synthesis improving the SNR is increased.

In the example of FIG. 9, the transmission control unit 19 orders the subcarrier mapping unit 12 to form a Walsh sequence having a length of 4, apply (1, -1, 1, -1) to the 12-th subcarrier, apply (1, 1, -1, -1) to the 268-th subcarrier, and apply (1, 1, 1, 1) to the 779-th subcarrier.

In accordance with the order, for example, the subcarrier mapping unit 12 executes mapping so as not to rotate when the symbol is 1 or so as to rotate when the symbol is -1. Thus, with four symbols, the phase differs in the subcarriers at every time, and the phase and the amplitude of the signals synthesized by the aliasing are different in the receiver.

The above-described mapping is suitable for the modulation scheme of transmitting the signal according to the presence and absence of the power, such as on/off keying. For example, the call signal which allows the incoming call information to be overlapped on the amplitude is available in the mapping. The mapping is also suitable for the communications having no significance on the absolute receive signal phase. For example, the synchronization signal is available.

The present example employs the Walsh sequence having a length of 4. However, the sequence does not need to have a length of 4 but may have any length. The sequence may be repeatedly employed.

The sequence does not need to be Walsh sequence but may be any sequence such as random sequence, pseudo-random sequence, Fourier sequence, a rated speed sequence having a variable rotary speed, a sequence capable of Gaussian rotation with a variable rotary speed, etc.

In addition, in the example of FIG. 9, the phase control is executed such that the phase differs in the subcarriers, at each symbol. Instead of this, however, amplitude control may be executed such that the amplitude differs in the subcarriers, at each symbol.

The above-described embodiment is described on application of the FFT. However, the same advantage can be obtained even if discrete Fourier Transform (DFT) is applied to the embodiment.

In addition, in the embodiment, the second radio communication apparatus estimates the channel response for each subcarrier (frequency characteristics of the amplitude level and the phase rotation amount) and transmits the channel response to the first radio communication apparatus. On the basis of the channel response, the first radio communication apparatus determines the corrected amount of the amplitude and the phase rotation amount.

Instead of this, however, the second radio communication apparatus may estimate the channel response for each subcarrier (frequency characteristics of the amplitude level and the phase rotation amount), determine the corrected amount of the amplitude and the phase rotation amount on the basis of the channel response, and transmit the corrected amount to the first radio communication apparatus so as to allow the first radio communication apparatus to correct the amplitude and the phase rotation amount.

## Claims

1. A radio communication system for executing multi-carrier communications employing a plurality of subcarriers between a plurality of radio communication apparatuses, the system **characterized by** comprising:
a first radio communication apparatus comprising:
a data generating unit (11) configured to generate transmit data;
a modulating unit (12) configured to modulate the transmit data to a modulation signal;
a mapping unit (12) configured to allocate the modulation signal to two subcarriers between which a frequency difference of a first frequency is;
an inverse Fourier transform unit (13) configured to perform inverse Fourier transform on the modulation signal allocated to each of the subcarriers to generate an OFDM modulation signal having a second frequency higher than the first frequency as a sample speed; and
a transmitter (14, 15, 16) transmitting a radio frequency signal obtained by converting the OFDM modulation signal into an analog signal and upconverting the analog signal; and
a second radio communication apparatus comprising:
a receiver (21, 22) receiving the radio frequency signal transmitted from the first radio communication apparatus and downconverting the radio frequency signal into a baseband signal;
an AD converter (24) executing AD conversion by sampling the baseband signal at the first frequency;
a Fourier transform unit (25) configured to perform Fourier transform on an output of the AD converter to extract a receive signal from the output of the AD converter; and
a data demapping unit (27) configured to demap the receive signal to obtain receive data.

2. The system according to claim 1, **characterized in that** if the receive data includes a known signal, the AD converter executes the AD conversion by sampling the baseband signal at the second frequency,
wherein the second radio communication apparatus further comprises:
an amplitude estimating unit (26) configured to estimate an amplitude characteristic of each of the two subcarriers, in accordance with the receive signal extracted by the Fourier transform unit; and
a characteristic information transmitter (29, 30) transmitting characteristic information representing the amplitude characteristic estimated by the amplitude estimating unit,
wherein the first radio communication apparatus further comprises:
a characteristic information receiver (18) receiving the characteristic information transmitted by the characteristic information transmitter; and
an amplitude control unit (19) configured to control an amplitude of the modulation signal allocated to each of the subcarriers by the mapping unit, in accordance with the characteristic information received by the characteristic information receiver, and
wherein the inverse Fourier transform unit performs the inverse Fourier transform on the modulation signal having the amplitude controlled by the amplitude control unit to generate the OFDM modulation signal having the second frequency higher than the first frequency as the sample speed.

3. The system according to claim 1, **characterized in that** if the receive data includes a known signal, the AD converter executes the AD conversion by sampling the baseband signal at the second frequency,
wherein the second radio communication apparatus further comprises:
a phase estimating unit (26) configured to estimate a phase characteristic of each of the two subcarriers, in accordance with the receive signal extracted by the Fourier transform unit; and
a characteristic information transmitter (29, 30) transmitting characteristic information representing the phase characteristic estimated by the phase estimating unit,
wherein the first radio communication apparatus further comprises:
a characteristic information receiver (18) receiving the characteristic information transmitted by the characteristic information transmitter; and
a phase control unit (19) configured to control a phase of the modulation signal allocated to each of the subcarriers by the mapping unit, in accordance with the characteristic information received by the characteristic information receiver, and
wherein the inverse Fourier transform unit performs the inverse Fourier transform on the modulation signal having the phase controlled by the phase control unit to generate the OFDM modulation signal having the second frequency higher than the first frequency as the sample speed.

4. The system according to claim 1, **characterized in that** the mapping unit executes allocating the modulation signal to the two subcarriers for a plurality of successive symbols included in the transmit data.

5. The system according to claim 1, **characterized in that** the mapping unit allocates the modulation signal to a subcarrier having a frequency different from the frequency in the previous allocation for each of the symbols.

6. The system according to claim 1, **characterized in that** the mapping unit controls a phase of the modulation signal to make a different phase between the subcarriers for each of the symbols included in the transmit data, and then allocates the modulation signal to the two subcarriers.

7. The system according to claim 1, **characterized in that** the mapping unit controls the amplitude of the modulation signal to make a different phase between the subcarriersfor each of the symbols included in the transmit data, and then allocates the modulation signal to the two subcarriers.

8. A radio communication apparatus communicating with another communication apparatus, **characterized by** comprising:
a receiver (21, 22) receiving a radio signal transmitted from another radio communication apparatus and downconverting the radio signal into a baseband signal, the another radio communication apparatus executing radio transmission by allocating a modulation signal to two subcarriers between which a frequency difference of a first frequency is, performing inverse Fourier transform on the modulation signal of each of the subcarriers to generate an OFDM modulation signal having a second frequency higher than the first frequency as a sample speed;
an AD conversion unit (24) configured to execute AD conversion by sampling the baseband signal output from the receiver at the first frequency;
a Fourier transform unit (25) configured to perform Fourier transform on the output of the AD conversion unit to extract a receive signal from an output of the AD conversion unit; and
a data demapping unit (27) configured to demap the receive signal to obtain receive data.
